# EUROPEAN PATENT SPECIFICATION

(11) **EP 3 127 966 B1**
(45) Date of publication and mention of the grant of the patent: **19.12.2018**
(21) Application number: 15179845.1
(22) Date of filing: 05.08.2015
(51) Int. Cl.: C09D 5/00

(54) **PROTECTIVE COATING COMPOSITION FOR CHROMIUM SURFACES**
SCHUTZBESCHICHTUNGSZUSAMMENSETZUNG FÜR CHROMOBERFLÄCHEN
COMPOSITION DE REVÊTEMENT DE PROTECTION POUR SURFACES DE CHROME

(43) Date of publication of application: 08.02.2017
(73) Proprietor: 3M Innovative Properties Company, St. Paul, MN 55133-3427 (US)
(72) Inventor: Schuell, Mr. Christoph, 41453 Neuss (DE); Jing, Mr. Naiyong, Saint Paul, MN Minnesota 55133-3427 (US)
(74) Representative: Gabriel, Kiroubagaranne

(56) References cited:
- EP-A1- 1 978 065
- EP-A1- 2 725 076
- US-A1- 2004 170 848
- US-A1- 2012 053 104

## Description

### Technical Field

The present disclosure relates generally to the field of protective coatings for metallic surfaces, more specifically to the field of protective coating compositions for chromium surfaces. The present disclosure also relates to a method of treating a chromium surface.

### Background

Metallic materials such as iron, steel, aluminum and zinc are widely used in the fields of transportation, aeronautics and astronautics, energy, electronics, architecture, upholstery, household electrical appliances, etc. In particular, stainless steel is ubiquitous in commercial kitchens, home kitchens, office buildings, airports, and various other public spaces. Most metals are susceptible to corrosion when exposed to humid air and corrosive liquids. Such corrosion may severely affect the quality of the metals and the products made of the metals. Accordingly, various methods for the passivation of metal surfaces to provide corrosion protection properties to such materials have been developed. Exemplary methods for providing corrosion protection to metallic surfaces are described e.g. in US 2005/0163933A1 (Dietsche et al.), US 2007/0240792A1 (Witteler et al.) and in US 2012/0053104A1 (Olson et al.). The disclosed methods make use of coating compositions comprising a water-soluble polymer, such as e.g. a polyacrylate. Document EP-A1-2725076 (Niimoto et al.) describes a two-component hydrolysis-type antifouling paint composition, an antifouling coating film, and a method for producing antifouling substrate. Document EP-A1-1978065 (Doumae et al.) describes a high solid antifouling coating composition, an antifouling coating film, a base with a coating film, an antifouling base, a method for forming a coating film on a base surface, a method for preventing fouling of a base, and a high solid multicomponent antifouling coating composition set. Document US 2004/0170848 (Ludwig et al.) a corrosion inhibiting composition for coating an article or substrate such as a metal, a metal coating, or a chromated metal coating, and the like, which comprises a film-forming compound such as a wax or a polymer, and a sulfide salt or thio compound or a derivative of a thio compound.

In contrast, protective coating compositions for alternative metallic surfaces such as those comprising essentially chromium are not widely described in the art. Chromium-containing metallic surfaces may though be encountered in a large variety of articles including those present in home or commercial kitchens, in decorative household appliances, in restrooms, in bathrooms, in automotive vehicles, or in consumer electronics.

Chromium surfaces are particularly sensitive to oily contaminants such as fingerprints, stains or marks originating from oily of fat components. Fingerprints or other oily contamination present on chrome surfaces not only detrimentally affect their aesthetic appearance, but may also attraction additional dirt such as lint or dust. The ability to remove or clean oily contamination from chromium-containing surfaces is particularly challenging mainly owing to their particular surface anchoring chemistry. Also, when used in decorative items, the maintaining of the optics and/or haptics of the protective surface treated surface is particularly challenging for chromium surfaces, in particular rough chromium surfaces.

Without contesting the technical advantages associated with the protective coating compositions known in the art for alternative metallic surfaces, there is still a need for a protective coating composition providing excellent easy-to-clean properties towards oily contamination present on chromium surfaces. Other advantages of the coating compositions and methods of the disclosure will be apparent from the following description.

### Summary

According to one aspect, the present disclosure relates to a method of reducing oily contamination from a chromium surface, which comprises the steps of:
a) providing a chromium surface;
b) applying a coating composition to the chromium surface thereby forming a layer of the coating composition adjacent to the chromium surface; and
c) drying and/or curing the layer of the coating composition thereby forming a coating layer adjacent to the chromium surface;
wherein the coating composition comprises:
i. a hydrophilic (co)polymer comprising functional groups selected from the group consisting of carboxylic acids, alcohols, amides, amines, phosphonic acids, sulfonic acids, and any combinations or salts thereof;
ii. optionally, a multivalent metal salt; and
iii. a solvent comprising water.

According to yet another aspect, the present disclosure relates to the use of a coating composition as described above for imparting oily contamination removal properties to a chromium surface.

### Detailed description

According to one aspect, the present disclosure relates to a method of reducing oily contamination from a chromium surface, which comprises the steps of:
a) providing a chromium surface;
b) applying a coating composition to the chromium surface thereby forming a layer of the coating composition adjacent to the chromium surface; and
c) drying and/or curing the layer of the coating composition thereby forming a coating layer adjacent to the chromium surface;
wherein the coating composition comprises:
i. a hydrophilic (co)polymer comprising functional groups selected from the group consisting of carboxylic acids, alcohols, amides, amines, phosphonic acids, sulfonic acids, and any combinations or salts thereof;
ii. optionally, a multivalent metal salt; and
iii. a solvent comprising water.

In the context of the present disclosure, it has been surprisingly found that a coating composition as described above provides excellent easy-to-clean properties towards oily contamination, in particular fingerprints, present on chromium surfaces.

Without wishing to be bound by theory, it is believed that this excellent easy-to-clean property is due to the hydrophilic (co)polymer which, when present on the treated surface, is believed to provide advantageous surface anchoring with the chromium surface and provide the treated chromium surface with hydrophilic properties particularly beneficial for the removal of an oily contamination, in particular with water.

In the context of the present disclosure, the expression "hydrophilic (co)polymer" is meant to designate a (co)polymer able to render the surface treated with such (co)polymer "hydrophilic", wherein a "hydrophilic" surface is meant to designate a surface that has the ability to be wet by aqueous solutions. Surfaces on which drops of water or aqueous solutions exhibit an advancing water contact angle of less than 45° will herewith be referred to as "hydrophilic" as per ASTM D7334-08. In contrast, "hydrophobic" surfaces are herewith meant to designate surfaces have an advancing water contact angle of 90° or greater as per ASTM D7334-08.

In the context of the present disclosure still, the expression "chromium surface" is meant to designate a metallic surface having a chromium content of at least 50wt%, based on the weight of the metallic surface.

The coating composition of the present disclosure is outstandingly suitable for reducing oily contamination from a chromium surface. As such, the protective coating compositions of the present disclosure are particularly suited for imparting "easy-to-clean" or "easy removal" properties to a chromium surface, in particular cleaning or removal with water or aqueous cleaning compositions. The coating compositions of the present disclosure may find utility as protective coating for chromium-containing metallic surfaces encountered in a large variety of articles including those present in home or commercial kitchens (e.g., refrigerator, dishwasher, stove, oven, microwave, exhaust hoods, fryers, grease traps, food-preparation tables, cabinets, toasters), in decorative household appliances and lighting, in restrooms (e.g., toilet roll dispensers, toilet stall partitions, urinal partitions), in bathrooms, in automotive vehicles (exterior or interior car or motorcycle parts, such as e.g. alloy wheels, body parts, decorative or functional metallic panels, tanks, handlebars, wheel guards, mirror caps), or in consumer electronics (metal cases for mobile phones, tablets, and computers).

The coating compositions of the present disclosure provide excellent easy-to-clean properties with regard to oily contamination on a treated chromium surface not only to fresh oily contamination (immediate removal) but also to dried oily contamination (later removal). Additionally, the coating compositions of the present disclosure provide outstanding easy-to-clean properties with regard to oily contamination on a treated chromium surface even upon prolonged exposure to wet environments. The chromium surfaces treated with the coating compositions of the present disclosure are further provided with excellent hydrolytic stability, as the beneficial properties of the coating compositions of the present disclosure may be maintained after prolonged immersion of the coating composition into water. This is particularly surprising as the hydrophilic (co)polymers for use herein are highly water-soluble. This excellent hydrolytic stability reflects the outstanding attachment/anchoring of the hydrophilic (co)polymers to the treated chromium surface.

Advantageously, the coating compositions of the present disclosure are able to provide excellent easy-to-clean properties with regard to oily contamination on chromium surfaces having various roughness characteristics, in particular on chromium surfaces having a roughness Ra comprised between 0.2 µm and 1.5 µm, in particular between 0.5 µm and 0.9 µm, when determined by confocal laser microscopy according to ISO 25178-6. Advantageously still, the coating compositions of the present disclosure are able to maintain the optics and/or haptics of the treated chromium surface on chromium surfaces having various roughness characteristics. According to yet another advantageous aspect, the protective coating compositions of the present disclosure are provided with excellent durability on chromium surfaces.

The coating composition of the present disclosure comprises, as a first technical feature, a hydrophilic (co)polymer comprising functional groups selected from the group consisting of carboxylic acids, alcohols, amides, amines, phosphonic acids, sulfonic acids, and any combinations or salts thereof. Suitable hydrophilic (co)polymers for use herein will be easily identified by those skilled in the art, in the light of the present description.

Typically, the hydrophilic (co)polymer for use herein is the polymerization reaction product of a (co)polymerizable material comprising (co)monomers having hydrophilic functional groups.

According to the present disclosure, the hydrophilic (co)polymer for use herein comprises functional groups selected from the group consisting of carboxylic acids, alcohols, amides, amines, phosphonic acids, sulfonic acids, and any combinations or salts thereof.

In a particular aspect, the hydrophilic (co)polymer for use herein comprises functional groups selected from the group consisting of carboxylic acids, phosphonic acids, sulfonic acids, and any combinations or salts thereof.

According to a preferred aspect of the coating composition of the present disclosure, the hydrophilic (co)polymer for use herein comprises carboxyl functional groups. Preferably, the hydrophilic (co)polymer for use herein comprises carboxylic acid functional groups derived from the (co)polymerization of (meth)acrylic acid monomers.

In a preferred aspect of the present disclosure, the hydrophilic (co)polymer for use herein comprises (or consists of) a polyacrylic acid (co)polymer. In a particular aspect of the coating composition, the hydrophilic (co)polymer comprises (or consists of) an acrylic acid homopolymer.

According to still a preferred aspect of the coating composition of the present disclosure, the hydrophilic (co)polymer for use herein is selected from the group consisting of polyacrylic acid, poly(2-acryloylamino-2-methylpropane-1-sulfonic acid), poly(acrylic acid-co-2-acryloylamino-2-methylpropane-1-sulfonic acid), poly(acrylic acid-co-itaconic acid), poly(acrylic acid-co-vinyl phosphonic acid), poly(acrylic acid-co-2-hydroxyethyl acrylate), poly(acrylic acid-co-poly(ethylenoxide)acrylate), poly(itaconic acid), poly(acrylic acid-co- acrylamide), poly(vinyl alcohol), and any combinations or salts thereof.

In a more preferred aspect of the present disclosure, the hydrophilic (co)polymer for use herein is selected from the group consisting of polyacrylic acid, poly(2-acryloylamino-2-methylpropane-1-sulfonic acid), poly(acrylic acid-co-2-acryloylamino-2-methylpropane-1-sulfonic acid), poly(acrylic acid-co-itaconic acid), poly(acrylic acid-co-vinyl phosphonic acid), poly(acrylic acid-co-2-hydroxyethyl acrylate), poly(itaconic acid), poly(acrylic acid-co- acrylamide), poly(vinyl alcohol), and any combinations or salts thereof.

In a preferred aspect of the present disclosure, the hydrophilic (co)polymer has a weight average molecular weight of at least 2.000 g/mol, at least 5.000 g/mol, at least 10.000 g/mol, at least 20.000 g/mol, at least 50.000 g/mol, at least 100.000 g/mol, at least 150.000 g/mol, or even at least 200.000 g/mol.

Unless otherwise stated, the weight average molecular weight of the hydrophilic (co)polymers for use herein is typically determined using conventional gel permeation chromatography (GPC) techniques well known to those skilled in the art, and described for example, in ASTM MNL17-2ND.

In the context of the present disclosure, it has been surprisingly discovered that coating compositions comprising hydrophilic (co)polymers having a weight average molecular weight of at least 2.000 g/mol, provide advantageous easy-to-clean properties with regard to oily contamination on a chromium surface coated with such coating compositions.

In a preferred aspect of the coating composition according to the present disclosure, the hydrophilic (co)polymer has a weight average molecular weight of at least 5.000 g/mol, at least 10.000 g/mol, at least 20.000 g/mol, at least 50.000 g/mol, at least 100.000 g/mol, at least 150.000 g/mol, or even at least 200.000 g/mol.

According to a particular aspect of the disclosure, the coating composition may advantageously comprise a multivalent metal salt. In the context of the present disclosure, it has been discovered that coating compositions comprising multivalent metal salts, are provided with improved durability, in particular against wet mechanical abrasion, when compared to similar coating compositions not comprising a multivalent metal salt. Without wishing to be bound by theory, it is believed that the multivalent metal salts present in the coating composition promote crosslinking of the hydrophilic (co)polymer chains.

The addition of a multivalent metal salt to the coating composition has been found to be particularly beneficial for those compositions comprising a hydrophilic (co)polymer having a weight average molecular weight of less than 50.000 g/mol, in particular a hydrophilic (co)polymer having a weight average molecular weight comprised between 2.000 g/mol and 50.000 g/mol. Such polymers may be referred to as low to medium molecular weight polymers.

According to a particular aspect of the coating composition according to the disclosure, the hydrophilic (co)polymer has a weight average molecular weight comprised between 2.000 g/mol and 50.000 g/mol. According to this particular execution, the coating composition may advantageously comprise a multivalent metal salt.

In a preferred aspect of the coating composition according to the present disclosure, the hydrophilic (co)polymer has a weight average molecular weight of at least 50.000 g/mol. According to this advantageous execution, the coating composition is substantially free of multivalent metal salts.

In the context of the present disclosure, it has been surprisingly discovered that coating compositions comprising a hydrophilic (co)polymer having a weight average molecular weight of at least 50.000 g/mol, are provided with improved durability, in particular against wet mechanical abrasion, when compared to similar coating compositions comprising a hydrophilic (co)polymer having a weight average molecular weight of less than 50.000 g/mol. Without wishing to be bound by theory, it is believed that the hydrophilic (co)polymers having a weight average molecular weight of at least 50.000 g/mol promote interfacial adhesion between the coating composition and the chromium surface by providing increased number of interfacial adhesion sites per single polymer molecule. It is further believed that hydrophilic (co)polymers having a weight average molecular weight of at least 50.000 g/mol lead to the forming of more densely packed protective coatings onto the chromium surface.

According to another preferred aspect of the coating composition according to the present disclosure, the hydrophilic (co)polymer has a weight average molecular weight comprised between 50.000 g/mol and 250.000 g/mol.

In an advantageous aspect of the coating composition according to the present disclosure, the hydrophilic (co)polymer has a weight average molecular weight of no greater than 300.000 g/mol. Coating compositions comprising a hydrophilic (co)polymer having a weight average molecular weight of no greater than 300.000 g/mol have been found to be advantageous in terms of the ability to maintain adequate viscosity of the coating composition ensuring not only advantageous wetting properties of the chromium surface, but also consistent and regular coating on the chromium surface. Coating compositions comprising a hydrophilic (co)polymer having a weight average molecular weight of greater than 300.000 g/mol are less advantageous in terms of the ability to maintain such advantageous properties.

According to another advantageous aspect of the coating composition according to the present disclosure, the hydrophilic (co)polymer has a weight average molecular weight of no greater than 250.000 g/mol, no greater than 200.000 g/mol, no greater than 150.000 g/mol, no greater than 100.000 g/mol, or even no greater than 50.000 g/mol.

In a typical aspect, the coating composition according to the present disclosure comprises a hydrophilic (co)polymer in an amount of at least 0.1 wt%, at least 0.3 wt%, or even at least 0.5 wt%, based on the weight of the overall coating composition.

In another typical aspect, the coating composition according to the present disclosure comprises a hydrophilic (co)polymer in an amount of less than 5 wt%, less than 4 wt%, or even less than 3 wt%, based on the weight of the overall coating composition.

According to a preferred aspect of the present disclosure, the coating composition comprises a hydrophilic (co)polymer in an amount comprised between 0.05 wt% and 10 wt%, between 0.1 wt% and 8 wt%, between 0.2 wt% and 6 wt%, between 0.3 wt% and 5 wt%, between 0.5 wt% and 4 wt%, between 0.5 wt% and 3 wt%, between 0.8 wt% and 2.5 wt%, between 1.0 wt% and 2.5 wt%, or even between 1.5 wt% and 2.5 wt%, based on the weight of the overall coating composition.

According to an advantageous aspect, the coating composition of the present disclosure has an oily contamination removal performance of less than 7 wet wipes, preferably less than 5 wet wipes, more preferably less than 3 wet wipes, even more preferably less than 2 wet wipes, after 200 wet mechanical abrasion cycles when measured according to the wet mechanical abrasion test method described in the experimental section.

According to another advantageous aspect, the coating composition of the present disclosure has an oily contamination removal performance of less than 7 wet wipes, preferably less than 5 wet wipes, more preferably less than 3 wet wipes, even more preferably less than 2 wet wipes, after 500 wet mechanical abrasion cycles when measured according to the wet mechanical abrasion test method described in the experimental section.

According to still another advantageous aspect, the coating composition of the present disclosure has an oily contamination removal performance of less than 7 wet wipes, preferably less than 5 wet wipes, more preferably less than 3 wet wipes, even more preferably less than 2 wet wipes, after 1000 wet mechanical abrasion cycles when measured according to the wet mechanical abrasion test method described in the experimental section.

The coating composition of the present disclosure comprises, as an optional but advantageous ingredient, a multivalent metal salt. Multivalent metal salts for use herein are not particularly limited. Any multivalent metal salts commonly known in the art may be used in the context of the present disclosure. Suitable multivalent metal salts for use herein will be easily identified by those skilled in the art, in the light of the present description. Exemplary multivalent metal salts for use herein are described in US 2007/0240792A1 (Witteler et al.), the content of which is herewith fully incorporated by reference.

According to a particular aspect of the coating composition of the present disclosure, the multivalent metal salt for use herein is a cation of a multivalent metal. In a preferred aspect, the multivalent metal salt for use herein is selected from the group consisting of zinc, aluminum, zirconium, chromium, iron, manganese, titanium, calcium, magnesium, and any combinations thereof.

According to a particular aspect of the coating composition of the present disclosure, the multivalent metal salt is a cation of a multivalent metal selected from the group consisting of zinc, aluminum, zirconium, and any combinations thereof.

In a preferred aspect, the multivalent metal salt for use herein is a cation of a multivalent metal selected from the group consisting of zinc, aluminum, and any combinations.

In a more preferred aspect, the multivalent metal salt for use herein is a cation of a multivalent metal selected from the group consisting of Zn(II), Al(III), Zr(IV), Cr(III), Fe(II), Ca(II), Mg(II), and any combinations thereof. More preferably, the multivalent metal salt for use herein is selected from the group consisting of Zn(II) and Al(III).

According to a typical aspect, the coating composition according to the present disclosure comprises a multivalent salt in an amount comprised between 0.1 wt% and 15 wt%, between 0.5 wt% and 12 wt%, between 1 wt% and 10 wt%, between 1.5 wt% and 8 wt%, between 2 wt% and 7 wt%, between 4 wt% and 6 wt%, or even between 4.5 wt% and 5.5 wt%, based on the weight of the hydrophilic (co)polymer.

The coating composition of the present disclosure comprises, as a further technical feature, a solvent comprising water. Solvents for use herein are not particularly limited. Any solvent comprising water commonly known in the art may be used in the context of the present disclosure. Suitable water-comprising solvents for use herein will be easily identified by those skilled in the art, in the light of the present description.

Examples of suitable water-comprising solvents for use herein include solvents comprising water and optionally also water-miscible solvents. Examples of suitable water-miscible solvents are primary or secondary mono- or polyalcohols having 1 to 6 carbon atoms, such as e.g. methanol, ethanol, propanol, isopropanol, n-butanol isobutanol, pentanol, hexanol or cyclohexanol. Other suitable water-miscible solvents include water-soluble ethers, such as dipropyleneglycol monomethylether (DPM) or diethylene glycol dimethylether (Diglyme).

According to one exemplary aspect of the coating composition of the present disclosure, the solvent for use herein comprises a combination of water and an organic solvent, in particular an alcohol. Examples of suitable alcohols for use herein include, but are not limited to, methanol, ethanol, propanol and isopropanol. Particular examples of suitable water-comprising solvents for use herein include solvent combinations of water and alcohols such as e.g. water/methanol, water/ethanol, water/propanol or water/isopropanol.

According to a typical aspect of the coating composition of the present disclosure, the solvent for use herein has a water content of at least 25 wt%, at least 30 wt%, at least 40 wt%, at least 50 wt%, at least 70 wt%, at least 80 wt%, at least 90 wt%, at least 95 wt%, or even at least 98 wt%, based on the weight of the solvent.

In a preferred aspect of the coating composition, the solvent for use herein consists essentially of water, preferably deionized water.

The coating composition of the present disclosure may further comprise an acid. Acids for use herein are not particularly limited. Any acid commonly known in the art may be used in the context of the present disclosure. Suitable acids for use herein will be easily identified by those skilled in the art, in the light of the present description.

Examples of suitable acids for use herein include inorganic acids or organic acids. Preferably, the acid for use herein is an organic acid. Suitable inorganic acids are advantageously selected from the group consisting of hydrochloric acid, nitric acid, phosphoric acid, sulfonic acid, and any combinations or mixtures thereof. Suitable organic acids are advantageously selected from the group consisting of formic acid, acetic acid, citric acid, and any combinations or mixtures thereof. Preferably, the organic acid is acetic acid.

In the context of the present disclosure, it was found that the addition of an acid, in particular an organic acid, may advantageously affect the stability of the coating compositions according to the disclosure by improving the solubility of the ingredients present in the coating composition. The addition of an acid, in particular an organic acid, was found to be particularly advantageous for those coating compositions comprising a multivalent metal salt.

The coating composition of the present disclosure may further comprise optional additives commonly known in the field. Suitable additives will be typically selected depending on the targeted application. Exemplary additives include, but are not limited to, surface-active compounds, corrosion inhibitors, complexing agents, galvanization assistants, coating additives, coloring pigments, chelating agents, detergents, stabilizers, dispersants, enzymes, dyes or perfumes.

The coating composition according to the present disclosure may be obtained according to techniques commonly known in the art. In a typical aspect, the coating composition is obtained by simply mixing the various ingredients - including the hydrophilic (co)polymer and optionally, the multivalent metal salt - into the solvent. The hydrophilic (co)polymer may be obtained by commonly known polymerization techniques or may be commercially purchased and used as such.

The coating compositions of the present disclosure may be in the form of a solution, emulsion, suspension, dispersion or aerosol, depending on the targeted application. According to a typical aspect, the coating composition is in the form of an aqueous solution.

As already mentioned, the term "chromium surface" is meant to designate a metallic surface having a chromium content of at least 50wt%, based on the weight of the metallic surface. Suitable chromium surfaces for use herein will be easily identified by those skilled in the art, in the light of the present description.

Chromium surfaces for use herein may of course also be provided with a thin oxidic (such as Cr₂O₃ and CrO) or hydroxidic surface layer. Such layers, which are usually formed spontaneously on the chromium surfaces when exposed to the ambient conditions, are meant to be included in the term "chromium surface". Further, chromium oxides and chromium hydroxides which may be present in the chromium surface are also meant to be included in the term 'chromium content".

In a particular aspect of the disclosure, the chromium surface for use herein is a metallic surface having a chromium content of at least 50 wt%, at least 70 wt%, at least 80 wt%, at least 90 wt%, at least 95 wt%, or even at least 98 wt%, based on the weight of the metallic surface. In another particular aspect, the chromium surface for use herein consists essentially of chromium ("pure" chromium).

Chromium surfaces for use herein may advantageously refer to a metallic surface comprising a metallic alloy having a chromium content of at least 50wt%, based on the weight of the metallic alloy. According to one particular aspect of the present disclosure, the chromium surface for use herein comprises a chromium containing alloy. Chromium containing alloys are commonly known to those skilled in the art. The type and amounts of alloying constituents is determined in accordance with the desired end application. Exemplary constituents of chromium alloys include, in particular Zn, Al, Pb, Si, Mg, Sn, Cu, Cd, Fe, Co, Ni, Mn, Zr or Ti.

A chromium surface may refer to the surface of a structure or a part composed entirely of chromium or a chromium-containing metallic alloy having a chromium content of at least 50wt%, based on the weight of the metallic alloy. Alternatively, a chromium surface may refer to the surface of a structure or a part coated or plated with pure chromium or with a chromium-containing metallic alloy having a chromium content of at least 50wt%, based on the weight of the metallic alloy. Structures or parts coated or plated with chromium or a chromium-containing metallic alloy may be composed of other materials, such as e.g. other metals or metal alloys, polymers or composites.

According to an advantageous aspect, the chromium surface for use herein may be present on a chrome-plated part, in particular a part chrome-plated by a galvanization process, in particular electrolytical galvanization or hot-dip galvanization process. In a particular aspect, the chromium surface is present on a part composed of a polymeric or composite material. According to an exemplary aspect, the polymeric or composite material is selected from the group consisting of polyolefins (polypropylene, polyethylene, high density polyethylene, blends of polypropylene), polyamide 6 (PA6), acrylonitrile butadiene styrene (ABS), PC/ABS blends, Polycarbonate (PC), Polyvinyl chloride (PVC), polyamide (PA), PUR, TPE, POM, polystyrene, poly(methyl) methacrylate, clear coats for vehicles, composite materials like fiber reinforced plastics, and any combinations or mixtures thereof.

In a particular aspect, the chromium surface for use herein is present on a chrome-plated part comprises or is composed of acrylonitrile butadiene styrene (ABS).

Oily contamination for use herein are not particularly limited. Any oily contamination commonly encountered on metallic surfaces present for example in articles or parts present in home or commercial kitchens, in decorative household appliances and lighting, in restrooms, in bathrooms, in automotive vehicles, or in consumer electronics, may be used in the context of the present disclosure. Suitable oily contamination for use herein will be easily identified by those skilled in the art, in the light of the present description. Exemplary oily contamination for use herein include, but are not limited to, stains originating from oily or fat components.

In a particular aspect of the coating composition according to the disclosure, the oily contamination takes the form of a stain originating from oily or fat components selected from group consisting of moisturizing creams, body protection creams, sun creams, facial creams, therapeutic creams, human body fat, edible fat, edible oil, food oil, and any combinations or mixtures thereof.

According to a preferred aspect, the oily contamination takes the form of a fingerprint.

The step of applying the coating composition may be performed according to techniques commonly known in the art. Suitable application methods depend on the number, size and shape of the chromium surface part to be treated, and are not particularly limited. Exemplary applications techniques include, but are not limited to, spraying, rolling, wiping or dipping. In a particular aspect, the step of applying the coating composition is performed by wiping or dipping.

The step of applying the coating composition may comprise a plurality of individual process steps, including pretreatment steps of the chromium surface. For example, the chromium surface may be cleaned with a suitable preparation before treatment or treated with a suitable physical surface treatment such as e.g. corona or plasma treatment. The chromium may be appropriately washed after and between such pre-treatment steps.

After the step of applying the coating composition, the treated chromium surface may be allowed to drip off to remove the excess of coating compositions. The excess coating composition and any resulting residues may alternatively be removed by means of a wipe, a squeegee or doctor blade. As an additional, but optional step, the layer of coating composition formed onto the chromium surface after the application step may be subjected to a drying and/or curing step. The drying and/or curing may be performed according to techniques well known in the art. Suitable drying and/or curing may be performed at room temperature or at elevated temperature, typically at temperatures comprised between 20°C and 210°C, in particular between 20°C and 180°C. Conditions and temperatures for performing the drying and/or curing step may be appropriately chosen by the person skilled in the art. A typical drying and/or curing step may be performed e.g. in an appropriate oven.

In yet another aspect, the present disclosure relates to the use of a coating composition as described above for imparting oily contamination removal properties to a chromium surface.

All particular and preferred aspects relating to, in particular, the hydrophilic (co)polymer, the multivalent metal salt, the solvent, the chromium surface and the oily contamination as described above in the context of the coating composition, are fully applicable to the description of uses of the present disclosure, as described above.

Item 1 is a method of reducing oily contamination from a chromium surface, which comprises the steps of:
a) providing a chromium surface;
b) applying a coating composition to the chromium surface thereby forming a layer of the coating composition adjacent to the chromium surface; and
c) drying and/or curing the layer of the coating composition thereby forming a coating layer adjacent to the chromium surface;
wherein the coating composition comprises:
i. a hydrophilic (co)polymer comprising functional groups selected from the group consisting of carboxylic acids, alcohols, amides, amines, phosphonic acids, sulfonic acids, and any combinations or salts thereof;
ii. optionally, a multivalent metal salt; and
iii. a solvent comprising water.

Item 2 is a method according to item 1, wherein the hydrophilic (co)polymer comprises functional groups selected from the group consisting of carboxylic acids, phosphonic acids, sulfonic acids, and any combinations or salts thereof.

Item 3 is a method according to any of the preceding items, wherein the hydrophilic (co)polymer comprises carboxyl functional groups, preferably carboxylic acid functional groups derived from the (co)polymerization of (meth)acrylic acid monomers.

Item 4 is a method according to any of the preceding items, wherein the hydrophilic (co)polymer is a polyacrylic acid (co)polymer and salts thereof.

Item 5 is a method according to any of the preceding items, wherein the hydrophilic (co)polymer is an acrylic acid homopolymer and salts thereof.

Item 6 is a method according to any of the preceding items, wherein the hydrophilic (co)polymer is selected from the group consisting of polyacrylic acid, poly(2-acryloylamino-2-methylpropane-1-sulfonic acid), poly(acrylic acid-co-2-acryloylamino-2-methylpropane-1-sulfonic acid), poly(acrylic acid-co-itaconic acid), poly(acrylic acid-co-vinyl phosphonic acid), poly(acrylic acid-co-2-hydroxyethyl acrylate), poly(acrylic acid-co-poly(ethylenoxide)acrylate), poly(itaconic acid), poly(acrylic acid-co- acrylamide), poly(vinyl alcohol), and any combinations or salts thereof.

Item 7 is a method according to any of the preceding items, wherein the hydrophilic (co)polymer is selected from the group consisting of polyacrylic acid, poly(2-acryloylamino-2-methylpropane-1-sulfonic acid), poly(acrylic acid-co-2-acryloylamino-2-methylpropane-1-sulfonic acid), poly(acrylic acid-co-itaconic acid), poly(acrylic acid-co-vinyl phosphonic acid), poly(acrylic acid-co-2-hydroxyethyl acrylate), poly(itaconic acid), poly(acrylic acid-co- acrylamide), poly(vinyl alcohol), and any combinations or salts thereof.

Item 8 is a method according to any of the preceding items, wherein the hydrophilic (co)polymer has a weight average molecular weight of at least 2.000 g/mol, at least 5.000 g/mol, at least 10.000 g/mol, at least 20.000 g/mol, at least 50.000 g/mol, at least 100.000 g/mol, at least 150.000 g/mol, or even at least 200.000 g/mol.

Item 9 is a method according to any of the preceding items, wherein the hydrophilic (co)polymer has a weight average molecular weight of no greater than 300.000 g/mol, no greater than 250.000 g/mol, no greater than 200.000 g/mol, no greater than 150.000 g/mol, no greater than 100.000 g/mol, or even no greater than 50.000 g/mol.

Item 10 is a method according to any of the preceding items, wherein the hydrophilic (co)polymer has a weight average molecular weight comprised between 2.000 g/mol and 50.000 g/mol.

Item 11 is a method according to item 10, wherein the coating composition further comprises a multivalent metal salt.

Item 12 is a method according to any of the preceding items, wherein the hydrophilic (co)polymer has a weight average molecular weight comprised between 50.000 g/mol and 250.000 g/mol.

Item 13 is a method according to item 12, wherein the coating composition is substantially free of multivalent metal salts.

Item 14 is a method according to any of the preceding items, wherein the multivalent metal salt is a cation of a multivalent metal selected from the group consisting of zinc, aluminum, zirconium, chromium, iron, manganese, titanium, calcium, magnesium, and any combinations thereof.

Item 15 is a method according to any of the preceding items, wherein the multivalent metal salt is a cation of a multivalent metal selected from the group consisting of zinc, aluminum, zirconium, and any combinations thereof; preferably from the group consisting of zinc, aluminum, and any combinations.

Item 16 is a method according to any of the preceding items, wherein the multivalent metal salt is selected from the group consisting of Zn(II), Al(III), Zr(IV), Cr(III), Fe(II), Ca(II), Mg(II), and any combinations thereof; preferably from the group consisting of Zn(II) and Al(III).

Item 17 is a method according to any of the preceding items, which comprises a hydrophilic (co)polymer in an amount of at least 0.1 wt%, at least 0.3 wt%, or even at least 0.5 wt% , based on the weight of the overall coating composition.

Item 18 is a method according to any of the preceding items, which comprises a hydrophilic (co)polymer in an amount of less than 5 wt%, less than 4 wt%, or even less than 3 wt%, based on the weight of the overall coating composition.

Item 19 is a method according to any of the preceding items, which comprises a hydrophilic (co)polymer in an amount comprised between 0.05 wt% and 10 wt%, between 0.1 wt% and 8 wt%, between 0.2 wt% and 6 wt%, between 0.3 wt% and 5 wt%, between 0.5 wt% and 4 wt%, between 0.5 wt% and 3 wt%, between 0.8 wt% and 2.5 wt%, between 1.0 wt% and 2.5 wt%, or even between 1.5 wt% and 2.5 wt%, based on the weight of the overall coating composition.

Item 20 is a method according to any of the preceding items, which comprises a multivalent salt in an amount comprised between 0.1 wt% and 15 wt%, between 0.5 wt% and 12 wt%, between 1 wt% and 10 wt%, between 1.5 wt% and 8 wt%, between 2 wt% and 7 wt%, between 4 wt% and 6 wt%, or even between 4.5 wt% and 5.5 wt%, based on the weight of the hydrophilic (co)polymer.

Item 21 is a method according to any of the preceding items, wherein the solvent has a water content of at least 25 wt%, at least 30 wt%, at least 40 wt%, at least 50 wt%, at least 70 wt%, at least 80 wt%, at least 90 wt%, at least 95 wt%, or even at least 98 wt%, based on the weight of the solvent.

Item 22 is a method according to any of the preceding items, wherein the solvent comprises a combination of water and an organic solvent, in particular an alcohol.

Item 23 is a method according to any of items 1 to 22, wherein the solvent consists essentially of water, preferably deionized water.

Item 24 is a method according to any of the preceding items, which further comprises an acid, wherein the acid is preferably selected from the group of inorganic acids or organic acids.

Item 25 is a method according to item 24, wherein the acid is an organic acid preferably selected from the group consisting of formic acid, acetic acid, citric acid, and any combinations or mixtures thereof.

Item 26 is a method according to item 24, wherein the acid is an inorganic acid preferably selected from the group consisting of hydrochloric acid, nitric acid, phosphoric acid, and any combinations or mixtures thereof.

Item 27 is a method according to any of the preceding items, wherein the chromium surface is a metallic surface having a chromium content of at least 50 wt%, at least 70 wt%, at least 80 wt%, at least 90 wt%, at least 95 wt%, or even at least 98 wt%, based on the weight of the metallic surface.

Item 28 is a method according to any of the preceding items, wherein the chromium surface consists essentially of chromium.

Item 29 is a method according to any of items 1 to 28 wherein the chromium surface comprises a chromium containing alloy.

Item 30 is a method according to any of the preceding items, wherein the oily contamination takes the form of a fingerprint.

Item 31 is a method according to any of the preceding items, wherein the oily contamination takes the form of a stain originating from oily of fat components selected from group consisting of moisturizing creams, body protection creams, sun creams, facial creams, therapeutic creams, human body fat, edible fat, edible oil, food oil, and any combinations or mixtures thereof.

Item 32 is a method according to any of the preceding items, wherein the coating composition has an oily contamination removal performance of less than 7 wet wipes, preferably less than 5 wet wipes, more preferably less than 3 wet wipes, even more preferably less than 2 wet wipes, after 200 wet mechanical abrasion cycles when measured according to the wet mechanical abrasion test method described in the experimental section.

Item 33 is a method according to any of the preceding items, wherein the coating composition has an oily contamination removal performance of less than 7 wet wipes, preferably less than 5 wet wipes, more preferably less than 3 wet wipes, even more preferably less than 2 wet wipes, after 500 wet mechanical abrasion cycles when measured according to the wet mechanical abrasion test method described in the experimental section.

Item 34 is a method according to any of the preceding items, wherein the coating composition has an oily contamination removal performance of less than 7 wet wipes, preferably less than 5 wet wipes, more preferably less than 3 wet wipes, even more preferably less than 2 wet wipes, after 1000 wet mechanical abrasion cycles when measured according to the wet mechanical abrasion test method described in the experimental section.

Item 35 is a method according to any of the preceding items, wherein the drying/curing step, in particular the curing step, is performed at elevated temperatures typically comprised between 60°C and 220°C, between 80°C and 200°C, between 100°C and 180°C, between 120°C and 160°C, or even between 130°C and 150°C.

Item 36 is the use of a coating composition as detailed in any of the preceding items for imparting oily contamination removal properties to a chromium surface.

### EXAMPLES

The present disclosure is further illustrated by the following examples. These examples are merely for illustrative purposes only and are not meant to be limiting on the scope of the appended claims.

### Test methods and procedures:

### Fingerprint removal testing

A fingerprint using artificial finger fat (AFF) is applied onto the test chromium surface with a force of 30N for 5 seconds and left to dry for 5 minutes or for 12 hours at room temperature. The artificial finger fat AFF is obtained by combining: 50g of artificial alkaline sweat (according to DIN EN ISO 105-E04), 2g of paraffin oil (commercially available from Sigma-Aldrich), 1.5g Lecithin (Fluidlecithin Super, commercially available from Brennessel, Munich, Germany) and 0.3g of PNC 400 (polymer commercially available from Brennessel, Munich, Germany).

The removal of the fingerprint is performed by wiping the fingerprint-contaminated surface with a wet kimwipe (dimension 0.3 cm x 0.5 cm, immersed with 0.5 ml of deionized water) using a force of 10N. The fingerprint removal performance is measured either after drying the fingerprint-contaminated coated chromium surface at room temperature for 5 minutes (immediate wet removal) or for 12 hours (overnight wet removal) or after immersing the coated chromium surface in deionized water for 12 hours at room temperature and drying with a wet kimwipe, followed by measuring the fingerprint-removal performance after drying the fingerprint-contaminated coated chromium surface at room temperature for 5 minutes (overnight immersion removal).

The fingerprint removal performance is reflected by the number of wet wipes necessary to completely remove the fingerprint (assessed by visual inspection). If complete removal of the fingerprint is not achieved after 7 wet wipes, the fingerprint removal performance test is not passed and the trial is characterized as "fail". The fingerprint removal performance is measured on the as-deposited coating composition (zero wet abrasion wipes "0x").

### Mechanical wet abrasion testing (Durability testing)

Abrasion tests are performed on a 5900 Reciprocating Abraser (available from Taber Industries) by employing a 10N force and a velocity of 60 cycles/minutes. The cloth used for the abrasion cycles is a 13.5 crockmeter cloth (crockmeter squares, 100% cotton) wetted with deionized water.

The durability of the coatings is measured after subjecting the coating to various wet abrasion wipes (200x, 500x or 1000x) - as detailed above - followed by fingerprint removal testing. If complete removal of the fingerprint (assessed by visual inspection) is not achieved after 7 wet wipes, the durability performance test is not passed and the trial is characterized as "fail".

### Sun cream removal testing

The sun cream (0.1 g) is rubbed onto a fingertip and a sun cream fingerprint is applied onto the test chromium surface with a force of 30N for 5 seconds. The removal of the sun scream is performed by wiping the contaminated surface with a wet kimwipe (dimension 0.3 cm x 0.5 cm, immersed with 0.5 ml of deionized water) using a force of 10N. The sun cream removal performance is measured either immediately after application of the sun cream fingerprint (immediate removal) or after immersing the contaminated surface in deionized water for 12 hours at room temperature (overnight removal).

The sun cream removal performance is assessed by visual inspection of the visible residues after one wet wipe. The rating scale ranges from 1 (no removal of visible residues at all) to 5 (complete removal of visible residues).

### Oil removal testing

Three drops of oil (0.1 g) colored with Oil Red O are placed on the test chromium surface using a pipette and distributed homogeneously on an area of 50 mm x 25 mm by wiping with a Kimwipe paper tissue with gentle pressure. The oily surface is left to dry for 15 minutes at 20°C. The removal of the oil is performed by rinsing the contaminated surface under running tap water for 15 seconds, followed by wiping with a dry kimwipe (dimension 0.3 cm x 0.5 cm, immersed with 0.5 ml of deionized water) using a force of 10N. The oil removal performance is measured either immediately after application of the sun cream fingerprint (immediate removal) or after immersing the contaminated surface in deionized water for 12 hours at room temperature (overnight removal).

The oil removal performance is assessed by visual inspection of the visible residues after one dry wipe. The rating scale ranges from 1 (no removal of visible residues at all) to 5 (complete removal of visible residues). The test results represent the average of two individual tests per plate.

### Test panels/substrates used for testing:

a) Chrome plated ABS test substrates having medium roughness (0.5 µm, determined by confocal laser microscopy) are available from HSO GmbH (Solingen, Germany). The test panels have a dimension of 100 mm x 50 mm x 2 mm.
b) Chrome plated ABS test substrates having high roughness (0.9 µm, determined by confocal laser microscopy) are available from HSO GmbH (Solingen, Germany). The test panels have a dimension of 100 mm x 50 mm x 2 mm.

### Materials employed:

In the examples, the following raw materials are used:
**Poly(acrylic acid)** (PAA-1) is a sodium salt of poly(acrylic acid) having a weight average molecular weight of 225.000 g/mol, commercially available as a 20% solution in water from Polysciences Inc., Warrington, PA.

**Poly(acrylic acid)** (PAA-2) is a sodium salt of poly(acrylic acid) having a weight average molecular weight of 100.000 g/mol, commercially available as a 20% solution in water from Sigma-Aldrich.

**Poly(acrylic acid)** (PAA-3) is a poly(acrylic acid) having a weight average molecular weight of 50.000 g/mol, commercially available as a 25% solution in water from Polysciences Inc., Warrington, PA.

**Poly(acrylic acid)** (PAA-4) is a sodium salt of poly(acrylic acid) having a weight average molecular weight of 8.000 g/mol, commercially available as a 40% solution in water from Polysciences Inc., Warrington, PA.

**Poly(acrylic acid)** (PAA-5) is a sodium salt of poly(acrylic acid) having a weight average molecular weight of 2.000 g/mol, commercially available as a 60% solution in water from Sigma-Aldrich.

**Poly(itaconic acid)** (PIA) is a polymer having a weight average molecular weight of 8.000 g/mol, commercially available as a solid powder from Polysciences Inc., Warrington (USA).

**Poly(acrylic acid-co- acrylamide)** (PAA-co-AM) is a sodium salt of poly(acrylic acid-co-acrylamide) having a weight average molecular weight of 200.000 g/mol, commercially available from Polysciences Inc., as a solid powder with a comonomer ratio of 1:9.

**Poly(vinyl alcohol)** (PVA) is a polymer having a weight average molecular weight of 31.000 g/mol, commercially available from Sigma-Aldrich under tradename Mowiol 4-88.

**Poly(2-acryloylamino-2-methylpropane-1-sulfonic acid)** (PAAMPS) is a polymer available from 3M Deutschland (Germany, Neuss), as a 18% solution in water with a comonomer ratio of 2:1.

**Poly(acrylic acid-co-2-acryloylamino-2-methylpropane-1-sulfonic acid)** (PAA-co-AMPS) is a polymer available from 3M Deutschland (Germany, Neuss), as a 20% solution in water with a comonomer ratio of 2:1.

**Poly(acrylic acid-co-itaconic acid)** (PAA-co-IA) is a polymer available from 3M ESPE (Germany), as a 20% solution in water with a comonomer ratio of 9:1.

**Poly(acrylic acid-co-vinyl phosphonic acid)** (PAA-co-VPA) is a available from 3M Deutschland (Germany, Neuss), as a 20% solution in water with a comonomer ratio of 1:1.

**Poly(acrylic acid-co-2-hydroxyethyl acrylate)** (PAA-co-HEA) is a polymer available from 3M Deutschland (Germany, Neuss), as a 20% solution in water with a comonomer ratio of 2:1.

**Acetic acid** is obtained from Sigma-Aldrich.
**Hydrochloric acid** is purchased from Sigma-Aldrich.
**Aluminum salt,** Aluminum (III) nitrate nonahydrate, commercially available from Acros. **Zinc salt,** zinc acetate dihydrate, commercially available from J.T. Backer Chemical Co.. **Magnesium salt** is magnesium sulfate anhydrous, >97%, commercially available from Sigma-Aldrich.
**Calcium salt** is calcium hydroxide, commercially available from Sigma-Aldrich.
**Sun cream,** commercially available in Germany under tradename Nivea Sun 30.
**Peanut oil,** commercially available from Food Club (Germany)
**Sunflower oil,** commercially available from Aldi (Germany).
Oil Red O is a dye, commercially available from Sigma-Aldrich.

### Preparation of the coating compositions:

The coating compositions are simply prepared by adding the appropriate amount of hydrophilic polymer into deionized water and dissolved by stirring for at least 10 minutes at 20°C using a magnetic stirring bar, so as to achieve the suitable concentration (0.5 wt% or 2wt%). When a multivalent metal salt is used, it is dissolved into the aqueous medium as a 1wt% solution. If needed, the aqueous solutions of the multivalent metal salts are acidified using an appropriate amount of acid (acetic acid or hydrochloric acid) to achieve required solubility.

### Coating procedure:

### Substrate cleaning:

Prior to testing the chromium test panels are cleaned by wiping once with isopropyl alcohol using a soaked fluff-free paper tissue (3M professional Panel Wipe 34567) and left to dry at 20°C for 10 minutes, followed by air corona treatment to remove organic contamination of the chromium surface resulting from packaging in protective paper.

### Dip-coating:

The samples are dip-coated using a UniSlide machine available from Velmex Inc., Bloomfield, NY (dipping speed: 300 mm/min, immersion time: 1 minute), followed by oven curing (Heraeus, Germany) at 140°C for 10 minutes. After cooling to room temperature, visible coating residues are removed by one wet wipe (KimWipe wet with deionized water) followed by one dry wipe, and then the so-treated sample is used for further testing.

### Wipe-coating:

Four drops (0.1 g) of the corresponding coating formulation are placed on an area of 50mm x 50mm of the chromium surface and coated by wiping using a KimWipe paper tissue with gentle pressure. The samples are either left to cure at 20°C for 12 hours or oven cured at 80°C for 10 minutes.

### Examples:

### Examples 1 to 8:

### Fingerprint removal performance of coating compositions comprising various hydrophilic (co)polymer types.

Example 1 is a comparative example using uncoated chrome surface. The coating compositions of examples 2 to 8 comprise hydrophilic (co)polymers having different chemical composition and weight average molecular weight. They all have a polymer concentration of 2wt% (at the exception of example 3 which has a polymer concentration of 0.5 wt%) and are non-acidified. The coating formulations used in experiments 1 to 8 are applied on chrome plated ABS test substrates having medium roughness (0.5 µm, determined by confocal laser microscopy) by dip-coating followed by oven-curing at 140°C for 10 minutes.

The data presented in Table 1 reflect the number of wet wipes to remove the fingerprint (FP). 0x, 200x and 1000x state the number of wet abrasion wipes after which the fingerprint-removal was tested. If complete removal of the fingerprint (assessed by visual inspection) is not achieved after 7 wet wipes, the durability performance test is not passed and the trial is characterized as "x": failed.

**Table 1:**

| Example | Polymer | Mw (g/mol) | FP-removal (immediate dry) | | FP-removal (overnight dry) | | FP-removal (overnight immersion) |
|---|---|---|---|---|---|---|---|
| | | | 0x | 1000x | 0x | 200x | |
| 1 | - | - | x | x | x | x | Not tested |
| 2 | PAA-1 | 225.000 | 1 | 2 | 1 | 2 | 1 |
| 3* | PAA-1 | 225.000 | 1 | 1 | 1 | 2 | 1 |
| 4 | PAA-2 | 100.00 | 1 | 1 | 1 | 4 | 1 |
| 5 | PAA-3 | 50.000 | 1 | 1 | 1 | 2 | 2 |
| 6 | PAA-4 | 8.000 | 1 | 2 | 1 | 7 | 1 |
| 7 | PIA | 8.000 | 1 | 5 | 1 | 3 | 1 |
| 8 | PAA-co-AM | 200.000 | 1 | 7 | 3 | x | 1 |

| | | | | | | | |
|---|---|---|---|---|---|---|---|
| (*) polymer concentration of 0.5wt% instead of 2 wt%. | | | | | | | |

### Examples 9 to 10:

### Fingerprint removal performance of coating compositions applied with various coating procedures on various chrome surface types.

The coating composition used in example 9 is applied on a chrome plated ABS test substrate having high roughness (0.9 µm, determined by confocal laser microscopy) by dip-coating followed by oven-curing at 140°C for 10 minutes. In contrast, the coating composition used in example 10 is applied on a chrome plated ABS test substrate having medium roughness (0.5 µm, determined by confocal laser microscopy) by wipe-coating followed by room temperature curing at 20°C for 12 hours. Both coating compositions comprise the same hydrophilic (co)polymer in the same polymer concentration of 2wt% and are non-acidified.

The data presented in Table 2 reflect the number of wet wipes to remove the fingerprint. 0x, 200x and 1000x state the number of wet abrasion wipes after which the fingerprint-removal was tested.

**Table 2:**

| Example | Polymer | Mw (g/mol) | FP-removal (immediate) | | FP-removal (overnight) | | FP-removal (overnight immersion) |
|---|---|---|---|---|---|---|---|
| | | | 0x | 1000x | 0x | 200x | |
| 9 | PAA-1 | 225.000 | 1 | 1 | 1 | 2 | 1 |
| 10 | PAA-1 | 225.000 | 1 | 2 | 3 | 4 | 1 |

### Examples 11 to 15:

### Fingerprint removal performance of coating compositions comprising a low average weight molecular weight hydrophilic (co)polymer and optionally a multivalent metal salt.

The coating compositions used in examples 11 to 15 comprise the same low molecular weight hydrophilic (co)polymer PAA-5 having an average weight molecular weight of 2.000 g/mol, in the same polymer concentration of 2wt% and are non-acidified (at the exception of the coating composition of example 13 which is acidified with acetic acid). The coating compositions of examples 12 to 15 additionally comprise a multivalent metal salt. The coating formulations are applied on chrome plated ABS test substrates having medium roughness (0.5 mm, determined by confocal laser microscopy) by dip-coating followed by oven-curing at 140°C for 10 minutes.

The data presented in Table 3 reflect the number of wet wipes to remove the fingerprint. 0x, 200x and 1000x state the number of wet abrasion wipes after which the fingerprint-removal was tested. If complete removal of the fingerprint (assessed by visual inspection) is not achieved after 7 wet wipes, the durability performance test is not passed and the trial is characterized as "x": failed.

**Table 3:**

| Example | Polymer | Metal salt | FP-removal (immediate) | | FP-removal (overnight) | | FP-removal (overnight immersion) |
|---|---|---|---|---|---|---|---|
| | | | 0x | 1000x | 0x | 200x | |
| 11 | PAA-5 | - | 1 | 3 | 1 | 5 | 2 |
| 12 | PAA-5 | Al(III) | 1 | 1 | 1 | 3 | 1 |
| 13* | PAA-5 | Zn(II) | 1 | 1 | 1 | 3 | 1 |
| 14 | PAA-5 | Mg(II) | 1 | 1 | 1 | 3 | 1 |
| 15 | PAA-5 | Ca(II) | 1 | 2 | 1 | 3 | 1 |

| | | | | | | | |
|---|---|---|---|---|---|---|---|
| (*) composition acidified with acetic acid. | | | | | | | |

### Examples 16 to 17:

### Oily contamination removal performance of a coating composition with respect to various oily contaminations under various conditions.

Example 16 is a comparative example using uncoated chrome surface. The coating composition used in example 17 comprises high molecular weight polymer PAA-1 in a polymer concentration of 2wt% and is non-acidified. The coating composition is applied on a chrome plated ABS test substrate having medium roughness (0.5 µm, determined by confocal laser microscopy) by dip-coating followed by oven-curing at 140°C for 10 minutes.

The data presented in Table 4 reflect the assessment of oily contamination removal performance on two types of oily contamination: sun cream (SC) and peanut oil (PO). The sun cream removal performance is assessed by visual inspection of the visible residues after one wet wipe. The oil removal performance is assessed by visual inspection of the visible residues after one wet wipe. The rating scale ranges from 1 (no removal of visible residues at all) to 5 (complete removal of visible residues).

**Table 4:**

| Example | Polymer | Mw (g/mol) | SC-removal by wet wipe | SC-removal by wet wipe after immersion in water (12 hours) | PO-removal by rinsing with water (15 sec) plus one dry wipe | PO-removal by rinsing with water (15 sec) after immersion in water (12 hours) plus one dry wipe |
|---|---|---|---|---|---|---|
| 16 | - | - | 1 | - | 1 | - |
| 17 | PAA-1 | 225.000 | 5 | 5 | 5 | 5 |

### Examples 18 to 26:

### Oil removal performance and fingerprint removal performance of coating compositions comprising various hydrophilic (co)polymer types.

Example 18 is a comparative example using uncoated chrome surface. The coating compositions of examples 19 to 26 comprise various hydrophilic (co)polymers. They all have a polymer concentration of 2wt% and are non-acidified (at the exception of the coating composition of example 22 which is acidified with hydrochloric acid). The coating formulations used in experiments 1 to 8 are applied on chrome plated ABS test substrates having medium roughness (0.5 µm, determined by confocal laser microscopy) by wipe-coating followed by oven-curing at 80°C for 10 minutes.

The data presented in Table 5 reflect the assessment of sunflower oil (SO) removal performance which is assessed by visual inspection of the visible residues after one dry wipe. The rating scale ranges from 1 (no removal of visible residues at all) to 5 (complete removal of visible residues). Table 5 further shows the fingerprint removal performance reflected by the number of wet wipes, which are necessary to completely remove the fingerprint. If complete removal of the fingerprint (assessed by visual inspection) is not achieved after 7 wet wipes, the durability performance test is not passed and the trial is characterized as "x": failed.

**Table 5:**

| Example | Polymer | SO-removal by rinsing with water (15 sec) plus one dry wipe | FP-removal (immediate) |
|---|---|---|---|
| 18 | - | 1 | x |
| 19 | PAA-1 | 5 | 1 |
| 20 | PAA-co-VPA | 5 | 2 |
| 21 | PAA-co-HEA | 5 | 1 |
| 22* | PVA | 4 | 1 |
| 23 | PAAMPS | 4 | 1 |
| 24 | PAA-co-AMPS | 4 | 2 |
| 25 | PAA-2 | 3 | 5 |
| 26 | PAA-co-IA | 3 | 6 |

| | | | |
|---|---|---|---|
| (*) composition acidified with acetic acid. | | | |

## Claims

1. A method of reducing oily contamination from a chromium surface, which comprises the steps of:
a) providing a chromium surface;
b) applying a coating composition to the chromium surface thereby forming a layer of the coating composition adjacent to the chromium surface; and
c) drying and/or curing the layer of the coating composition thereby forming a coating layer adjacent to the chromium surface;
wherein the coating composition comprises:
i. a hydrophilic (co)polymer comprising functional groups selected from the group consisting of carboxylic acids, alcohols, amides, amines, phosphonic acids, sulfonic acids, and any combinations or salts thereof;
ii. optionally, a multivalent metal salt; and
iii. a solvent comprising water.

2. A method according to claim 1, wherein the hydrophilic (co)polymer comprises carboxyl functional groups, preferably carboxylic acid functional groups derived from the (co)polymerization of (meth)acrylic acid monomers.

3. A method according to claim 1 or 2, wherein the hydrophilic (co)polymer is a polyacrylic acid (co)polymer and salts thereof.

4. A method according to any of the preceding claims, wherein the hydrophilic (co)polymer is selected from the group consisting of polyacrylic acid, poly(2-acryloylamino-2-methylpropane-1-sulfonic acid), poly(acrylic acid-co-2-acryloylamino-2-methylpropane-1-sulfonic acid), poly(acrylic acid-co-itaconic acid), poly(acrylic acid-co-vinyl phosphonic acid), poly(acrylic acid-co-2-hydroxyethyl acrylate), poly(itaconic acid), poly(acrylic acid-co- acrylamide), poly(vinyl alcohol), and any combinations or salts thereof.

5. A method according to any of the preceding claims, wherein the hydrophilic (co)polymer has a weight average molecular weight of at least 2.000 g/mol, at least 5.000 g/mol, at least 10.000 g/mol, at least 20.000 g/mol, at least 50.000 g/mol, at least 100.000 g/mol, at least 150.000 g/mol, or even at least 200.000 g/mol.

6. A method according to any of the preceding claims, wherein the hydrophilic (co)polymer has a weight average molecular weight of no greater than 300.000 g/mol, no greater than 250.000 g/mol, no greater than 200.000 g/mol, no greater than 150.000 g/mol, no greater than 100.000 g/mol, or even no greater than 50.000 g/mol.

7. A method according to any of the preceding claims, wherein the multivalent metal salt is a cation of a multivalent metal selected from the group consisting of zinc, aluminum, zirconium, chromium, iron, manganese, titanium, calcium, magnesium, and any combinations thereof.

8. A method according to any of the preceding claims, wherein the solvent has a water content of at least 25 wt%, at least 30 wt%, at least 40 wt%, at least 50 wt%, at least 70 wt%, at least 80 wt%, at least 90 wt%, at least 95 wt%, or even at least 98 wt%, based on the weight of the solvent.

9. A method according to any of the preceding claims, wherein the chromium surface is a metallic surface having a chromium content of at least 50 wt%, at least 70 wt%, at least 80 wt%, at least 90 wt%, at least 95 wt%, or even at least 98 wt%, based on the weight of the metallic surface.

10. A method according to any of the preceding claims, wherein the chromium surface consists essentially of chromium.

11. A method according to any of the preceding claims, wherein the oily contamination takes the form of a fingerprint.

12. Use of a coating composition as detailed in any of claims 1 to 8 for imparting oily contamination removal properties to a chromium surface.

## Patentansprüche

1. Verfahren zum Reduzieren von öliger Verunreinigung von einer Chromoberfläche, das die folgenden Schritte umfasst:
a) Bereitstellen einer Chromoberfläche;
b) Auftragen einer Beschichtungszusammensetzung auf die Chromoberfläche, wodurch eine Schicht der Beschichtungszusammensetzung angrenzend an die Chromoberfläche gebildet wird; und
c) Trocknen und/oder Härten der Schicht der Beschichtungszusammensetzung, wodurch eine Beschichtungsschicht angrenzend an die Chromoberfläche gebildet wird;
wobei die Beschichtungszusammensetzung Folgendes umfasst:
i. ein hydrophiles (Co)polymer, das funktionelle Gruppen umfasst, die ausgewählt sind aus der Gruppe bestehend aus Carbonsäuren, Alkoholen, Amiden, Aminen, Phosphonsäuren, Sulfonsäuren und jeglichen Kombinationen oder Salzen davon;
ii. wahlweise ein mehrwertiges Metallsalz; und
iii. ein Lösungsmittel, das Wasser umfasst.

2. Verfahren nach Anspruch 1, wobei das hydrophile (Co)polymer funktionelle Carboxylgruppen umfasst, vorzugsweise funktionelle Carbonsäuregruppen, die aus der (Co)polymerisation von (Meth)acrylsäuremonomeren abgeleitet sind.

3. Verfahren nach Anspruch 1 oder 2, wobei das hydrophile (Co)polymer ein Polyacrylsäure-(Co)polymer und Salze davon ist.

4. Verfahren nach einem der vorstehenden Ansprüche, wobei das hydrophile (Co)polymer ausgewählt ist aus der Gruppe bestehend aus Polyacrylsäure, Poly(2-acryloylamino-2-methylpropan-1-sulfonsäure), Poly(acrylsäure-co-2-acryloylamino-2-methylpropan-1-sulfonsäure), Poly(acrylsäure-co-itaconsäure), Poly(acrylsäure-co-vinylphosphonsäure), Poly(acrylsäure-co-2-hydroxyethylacrylat), Poly(itaconsäure), Poly(acrylsäure-co-acrylamid), Poly(vinylalkohol) und jegliche Kombinationen oder Salze davon.

5. Verfahren nach einem der vorstehenden Ansprüche, wobei das hydrophile (Co)polymer ein Molekulargewicht-Gewichtsmittel von mindestens 2,000 g/mol, mindestens 5,000 g/mol, mindestens 10,000 g/mol, mindestens 20,000 g/mol, mindestens 50,000 g/mol, mindestens 100,000 g/mol, mindestens 150,000 g/mol oder sogar mindestens 200,000 g/mol aufweist.

6. Verfahren nach einem der vorstehenden Ansprüche, wobei das hydrophile (Co)polymer ein Molekulargewicht-Gewichtsmittel von nicht mehr als 300,000 g/mol, nicht mehr als 250,000 g/mol, nicht mehr als 200,000 g/mol, nicht mehr als 150,000 g/mol, nicht mehr als 100,000 g/mol oder sogar nicht mehr als 50,000 g/mol aufweist.

7. Verfahren nach einem der vorstehenden Ansprüche, wobei das mehrwertige Metallsalz ein Kation eines mehrwertigen Metalls ist, das ausgewählt ist aus der Gruppe bestehend aus Zink, Aluminium, Zirconium, Chrom, Eisen, Mangan, Titan, Calcium, Magnesium und jeglichen Kombinationen davon.

8. Verfahren nach einem der vorstehenden Ansprüche, wobei das Lösungsmittel einen Wassergehalt von mindestens 25 Gew.-%, mindestens 30 Gew.-%, mindestens 40 Gew.-%, mindestens 50 Gew.-%, mindestens 70 Gew.-%, mindestens 80 Gew.-%, mindestens 90 Gew.-%, mindestens 95 Gew.-% oder sogar mindestens 98 Gew.-%, bezogen auf das Gewicht des Lösungsmittels, aufweist.

9. Verfahren nach einem der vorstehenden Ansprüche, wobei die Chromoberfläche eine metallische Oberfläche ist, die einen Chromgehalt von mindestens 50 Gew.-%, mindestens 70 Gew.-%, mindestens 80 Gew.-%, mindestens 90 Gew.-%, mindestens 95 Gew.-% oder sogar mindestens 98 Gew.-%, bezogen auf das Gewicht der metallischen Oberfläche, aufweist.

10. Verfahren nach einem der vorstehenden Ansprüche, wobei die Chromoberfläche im Wesentlichen aus Chrom besteht.

11. Verfahren nach einem der vorstehenden Ansprüche, wobei die ölige Verunreinigung die Form eines Fingerabdrucks aufweist.

12. Verwendung einer Beschichtungszusammensetzung wie in einem der Ansprüche 1 bis 8 beschrieben, um einer Chromoberfläche Eigenschaften zur Entfernung öliger Verunreinigungen zu verleihen.

## Revendications

1. Procédé de réduction de la contamination huileuse d'une surface de chrome, qui comprend les étapes consistant à :
a) fournir une surface de chrome ;
b) appliquer une composition de revêtement sur la surface de chrome, formant ainsi une couche de la composition de revêtement adjacente à la surface de chrome ; et
c) sécher et/ou durcir la couche de la composition de revêtement, formant ainsi une couche de revêtement adjacente à la surface de chrome ;
dans lequel la composition de revêtement comprend :
i. un (co)polymère hydrophile comprenant des groupes fonctionnels choisis dans le groupe constitué d'acides carboxyliques, alcools, amides, amines, acides phosphoniques, acides sulfoniques et de toutes combinaisons ou tous sels de ceux-ci ;
ii. éventuellement, un sel de métal multivalent ; et
iii. un solvant comprenant de l'eau.

2. Procédé selon la revendication 1, dans lequel le (co)polymère hydrophile comprend des groupes fonctionnels carboxyliques, de préférence des groupes fonctionnels acide carboxylique dérivés de la (co)polymérisation de monomères d'acide (méth)acrylique.

3. Procédé selon la revendication 1 ou 2, dans lequel le (co)polymère hydrophile est un (co)polymère d'acide polyacrylique et des sels de celui-ci.

4. Procédé selon l'une quelconque des revendications précédentes, dans lequel le (co)polymère hydrophile est choisi dans le groupe constitué de l'acide polyacrylique, du poly(acide 2-acryloylamino-2-méthylpropane-1-sulfonique), du poly(acide acrylique-co-acide 2-acryloylamino-2-méthylpropane-1-sulfonique), du poly(acide acrylique-co-acide itaconique), du poly(acide acrylique-co-acide vinylphosphonique), du poly(acide acrylique-co-acrylate de 2-hydroxyéthyle), du poly(acide itaconique), du poly(acide acrylique-co-acrylamide), du poly(alcool vinylique) et de toutes combinaisons ou tous sels de ceux-ci.

5. Procédé selon l'une quelconque des revendications précédentes, dans lequel le (co)polymère hydrophile a une masse moléculaire moyenne en poids d'au moins 2 000 g/mol, d'au moins 5 000 g/mol, d'au moins 10 000 g/mol, d'au moins 20 000 g/mol, d'au moins 50 000 g/mol, d'au moins 100 000 g/mol, d'au moins 150 000 g/mol, voire d'au moins 200 000 g/mol.

6. Procédé selon l'une quelconque des revendications précédentes, dans lequel le (co)polymère hydrophile a une masse moléculaire moyenne en poids non supérieure à 300 000 g/mol, non supérieure à 250 000 g/mol, non supérieure à 200 000 g/mol, non supérieure à 150 000 g/mol, non supérieure à 100 000 g/mol, voire non supérieure à 50 000 g/mol.

7. Procédé selon l'une quelconque des revendications précédentes, dans lequel le sel de métal multivalent est un cation d'un métal multivalent choisi dans le groupe constitué du zinc, de l'aluminium, du zirconium, du chrome, du fer, du manganèse, du titane, du calcium, du magnésium et de toutes combinaisons de ceux-ci.

8. Procédé selon l'une quelconque des revendications précédentes, dans lequel le solvant a une teneur en eau d'au moins 25 % en poids, d'au moins 30 % en poids, d'au moins 40 % en poids, d'au moins 50 % en poids, d'au moins 70 % en poids, d'au moins 80 % en poids, d'au moins 90 % en poids, d'au moins 95 % en poids, voire d'au moins 98 % en poids, par rapport au poids du solvant.

9. Procédé selon l'une quelconque des revendications précédentes, dans lequel la surface de chrome est une surface métallique ayant une teneur en chrome d'au moins 50 % en poids, d'au moins 70 % en poids, d'au moins 80 % en poids, d'au moins 90 % en poids, d'au moins 95 % en poids, voire d'au moins 98 % en poids, par rapport au poids de la surface métallique.

10. Procédé selon l'une quelconque des revendications précédentes, dans lequel la surface de chrome est essentiellement constituée de chrome.

11. Procédé selon l'une quelconque des revendications précédentes, dans lequel la contamination huileuse prend la forme d'une empreinte digitale.

12. Utilisation d'une composition de revêtement selon l'une quelconque des revendications 1 à 8, pour conférer des propriétés d'élimination de contamination huileuse à une surface de chrome.
